# EUROPEAN PATENT SPECIFICATION

(11) **EP 3 297 425 B1**
(45) Date of publication and mention of the grant of the patent: **26.06.2019**
(21) Application number: 16724364.1
(22) Date of filing: 17.05.2016
(51) Int. Cl.: A01G 27/04, A01G 27/00

(54) **ARRANGEMENT FOR AUTOMATIC SUPPLY OF WATER TO INDOOR PLANTS**
ANORDNUNG ZUR AUTOMATISCHEN WASSERVERSORGUNG VON ZIMMERPFLANZEN
AGENCEMENT D'ALIMENTATION AUTOMATIQUE EN EAU POUR DES PLANTES D'INTÉRIEUR

(30) Priority: 18.05.2015 DK 201570285; 13.11.2015 EP 15194446
(43) Date of publication of application: 28.03.2018
(73) Proprietor: 3KF, 8300 Odder (DK)
(72) Inventor: ANDERSEN, Morten Kjeldsen, 8300 Odder (DK)
(74) Representative: Inspicos P/S
(86) International application number: PCT/EP2016/060997
(87) International publication number: WO 2016/184843

(56) References cited:
- WO-A1-00/01220
- DE-U1- 20 216 035
- FR-A- 1 035 799
- FR-A1- 2 543 794
- US-A1- 2014 366 438

## Description

### FIELD OF THE INVENTION

The present invention relates to an arrangement for automatic watering of indoor plants during a predetermined period, such as during vacation periods.

### BACKGROUND OF THE INVENTION

In relation to vacation periods and other travel activities, indoor plants will very often sacrifice due to the lack of watering during the period where no one at home.

A normal way to cope with this is to over-water just before leaving the home with the risk of overflow and soaked roots in the start of the period and a dried-up plant at the end of the period. Both situations will stress the indoor plant and as a result be a gambling with the survival of the in many times very expensive indoor plant.

Another very used method is to involve neighbours, nearby family etc. to enter the house from time to time during the vacation period for watering the plants. However, this is taking other people's time and in addition this is getting more and more difficult due to the trend of more theft alarms installed in the houses these days.

Thus there is a need for some kind of watering arrangements so that indoor plants can take of themselves during for example a vacation period.

Document WO 00/01220 A1 discloses a watering bag for automatic supply of water to plants according to the preamble of claim 1.

It may thus be seen as an object of the present invention to provide an arrangement that provides water to indoor plants during a predetermined period of time, such as a vacation period, in a controlled manner.

### DESCRIPTION OF THE DRAWINGS

The above-mentioned object is complied with by providing a watering bag for automatic supply of water to indoor plants, according to claim 1.

The watering bag of the present invention is of particular relevance in relating to watering of indoor plants being positioned in pots.

It is advantageous that the watering bag of the present invention provides a cheap and reliable watering system which finds its primary use when indoor plants are left without surveillance for longer periods of time, such as during vacation periods.

The watering bag may comprise a pair of polymer foils being welded together. The friction inducing arrangement is provided for leading water to the plant in a controllable way. In principle the friction inducing arrangement may be implemented in various ways, including a guided water path and/or a plurality of welded dots arranged in a predefined pattern. Other types of friction inducing arrangements may be applicable as well. Such other friction inducing arrangements may include the use of one or more meshes.

The watering bag may comprise one or more releasable binding means being adapted to secure the watering bag to a plant. These binding means may be implemented as releasable binding strips.

The reservoir may in principle have any capacity. However, in order to cover a 7-10 days watering period the water reservoir may be capable of housing between 1 and 4 litres of water, such as between 2 and 3 litres of water, such as around 2,3 litres of water.

The watering bag may comprise a folding region at which the watering bag is adapted to fold when it is positioned on the soil of for example an indoor plant. The folding region may be defined by a number of welded dots.

In a first embodiment the friction inducing arrangement may be provided by punching a hole in the welded foils using a sharp tip. The diameter of the hole may be around 0.2 mm. This ensures that one droplet of water is provided at least every 60 seconds, such as at least every 45 seconds, such as at least every 30 seconds.

According to the invention, the friction inducing arrangement comprises a mesh having a predetermined permeability. The permeability of the mesh may be at least partly given by the material density/openness of the mesh, said openness being in the range 2-10%, such as 2-8%, such as 2-6%, such as 2-4%, such as around 2%. The term openness is here to be understood as an open area of a given surface area. Thus, in case of a mesh having a surface area of 100 mm² and an openness of 2% the total open area is 2 mm².

The mesh is secured to the watering bag using an adhesive, said adhesive defining a lower passage to the mesh. The lower passage is thus between a side of the watering bag and the mesh. The diameter of the lower passage may be between 5 mm and 15 mm, such as around 10 mm. Through-going holes are provided in the side of watering bag in relation to the lower passage so that water is allowed to escape from the bag and into the lower passage. Thus, the holes are provided in an area coinciding with the lower passage. Moreover, an upper passage is arranged on the mesh. This upper passage may have a diameter between 4 mm and 12 mm, such as around 8 mm. The upper passage may be defined by an adhesive, an ink layer or appropriate means.

### BRIEF DESCRIPTION OF THE DRAWINGS

The present invention will now be described in further details with reference to the accompanying figures, wherein
Fig. 1 shows a watering bag applying a first water friction type,
Fig. 2 shows a watering bag applying a second water friction type,
Fig. 3 shows a watering bag applying a third water friction type,
Fig. 4 shows a watering bag with releasable binding strips,
Fig. 5 shows a watering bag with released binding strips,
Fig. 6 shows a close-up of the present invention,
Fig. 7 shows the present invention in full scale, and
Fig. 8 illustrates a watering bag in use.

While the invention is susceptible to various modifications and alternative forms specific embodiments have been shown by way of examples in the drawings and will be described in details herein. It should be understood, however, that the invention is not intended to be limited to the particular forms disclosed. Rather, the invention is to cover all modifications, equivalents, and alternatives falling within the scope of the invention as defined by the appended claims.

### DETAILED DESCRIPTION OF THE INVENTION

In its most general aspect the present invention relates to a simple and effective solution involving a watering bag. By placing the watering bag in the pot of an indoor plant an automatic watering process will take place over a predetermined time period.

The principle underlying the invention is a disposable polymer bag, where water is filled in at the top. The polymer bag has a reservoir for approximately 2.3 liters. An arrangement of water traps/barriers are integrated at the bottom of the polymer bag. The water traps/barriers add friction to the water flow.

At the very bottom part of the bag, a small tuned opening is processed, where the amount of water dripping out can be controlled in a very accurate manner.

The water bag is manufactured by heat welding two polymer foils together using a heat welding tool having the bag's geometry as well as the selected design of the water traps/barriers.

The bag should be empty after 7-10 days of watering. The positioning of the bag on top of the soil in the pot reduces the evaporation of water from the soil and thereby save water for the plant's survival.

The watering bag according to the present invention is suitable for mass production and thereby very cost efficient.

The size and weight of a single water droplet is determined by the surface tension of water, the density of water and to as minor degree the temperature of the water. One droplet of clean fresh water typically has a weight of 40 mg and thereby a volume of 40 mm³

From this knowledge one can set up the following calculations:
10 days = 10 x 24 x 60 x 60 sec = 864.000 sec
1.6 L = 1600 cm³ = 1.600.000 mm³.
1 droplet = 40 mm³ = 40 mg.

Thus, the amount of droplets in 1.6 L equals 1.600.000/40 = 40.000 droplets. Moreover, the number droplets per second is then 40.000/864.000 = 0.0463 which corresponds to one droplet every 22 seconds.

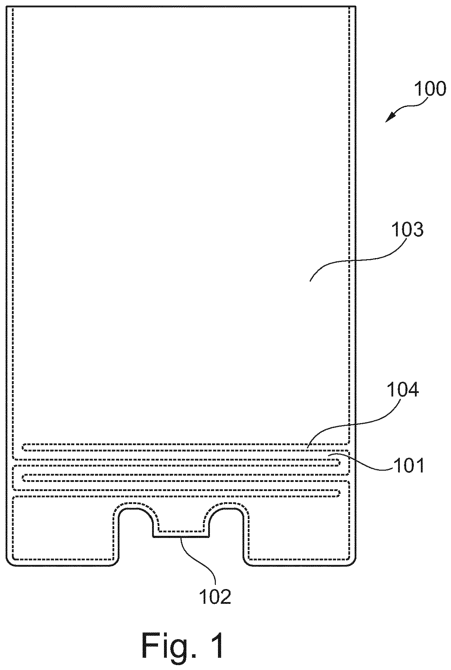

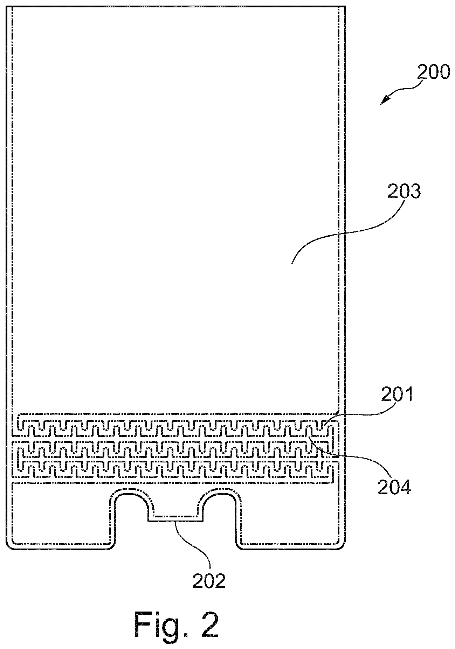

The water traps/barriers integrated at the bottom of the polymer bag may be implemented in various ways. Fig. 1 shows a polymer bag 100 having a reservoir 103, a water outlet 102 and a channel 101 forming the water traps/barriers between heat welded regions 104. Fig. 2 shows a more complicated water trap/barrier 201 between heat welded regions 204. Similar to Fig. 1 the embodiment 200 depicted in Fig. 2 has a reservoir 203 and a water outlet 202.

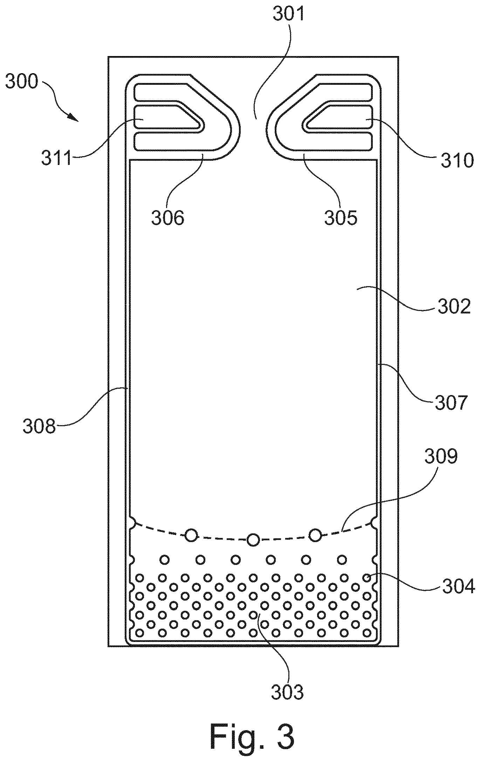

Another embodiment 300 of the present invention is depicted in Fig. 3. This embodiment comprises a water inlet 301, a reservoir 302 and water traps/barriers 303 being formed by a plurality of welded dots 304. The water inlet 301 is defined between welded portions 305, 306, 310 and 311. Similarly, the reservoir 302 is defined between welded portions 307 and 308. The dotted line 309 indicates where the watering bag is intended to fold when it is positioned on the soil of the indoor plant.

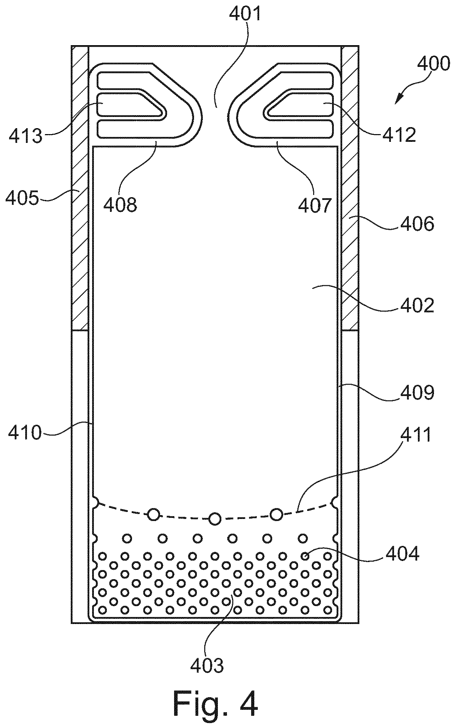

Fig. 4 shows an embodiment 400 of the present invention comprising a water inlet 401, a reservoir 402 and water traps/barriers 403 being formed by a plurality of welded dots 404. The water inlet 401 and the reservoir 402 are defined between welded portions 407, 408, 412, 413 and 409, 410, respectively. Again, the folding of the watering bag is marked as 411. In addition, two releasable binding strips 405, 406 are defined by perforated lines.

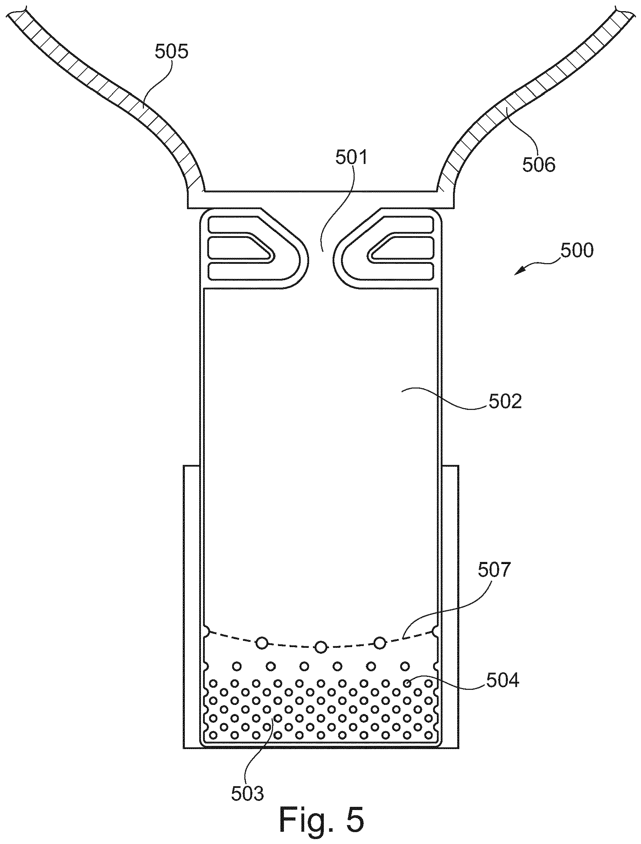

As illustrated in Fig. 5 the releasable binding strips 505, 506 may be at least partly detached from the bag so that they form a pair of binding strips that can be used to secure the bag to the indoor plant. Similar to Fig. 4 the watering bag 500 shown in Fig. 5 also comprises a water inlet 501, a reservoir 502 and water traps/barriers 503 being formed by a plurality of welded dots 504. The folding line 507 is depicted as well.

The embodiment depicted in Figs. 4 and 5 is made of a Low Density Poly Ethylene (LDPE) foil which as a high surface energy that reduces the amount of air bubbles. The thickness of the foil is 60 µm and the foil itself is semi-transparent having a green color. The capacity of the watering bag is approximately 2.3 liter.

The water outlet (not shown in Figs. 3-5) of the watering bag is around 0.2 mm. Typically two water outlet holes are made in one process using a 0.2 mm needle with a sharp tip.

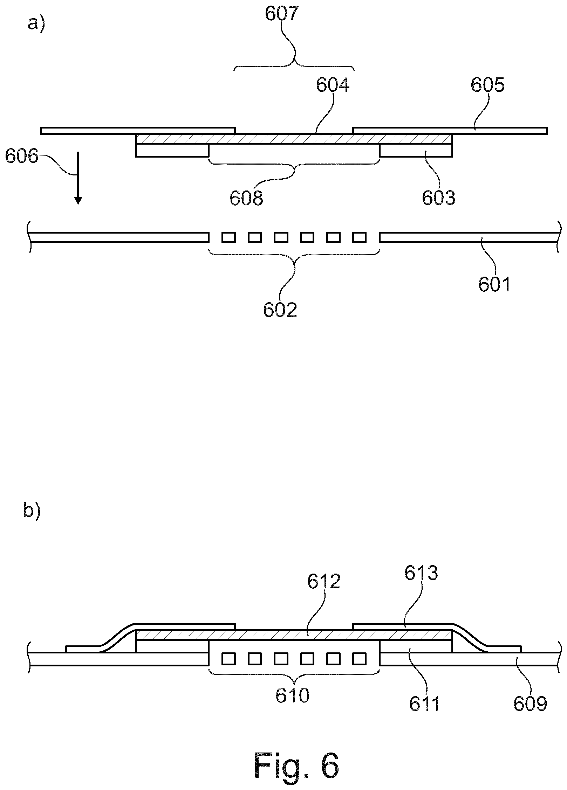

Fig. 6 shows the water outlet region. As depicted in Fig. 6a a plurality of holes 602 are provided through the side 601 of the polymer bag. In Fig. 6a only one side of the polymer bag is depicted. The diameter of the holes 602, the number of holes as well as the density of the holes may be varied in order to adjust the amount of water that can escape through the holes 602. As an example 25 holes having a diameter of 0.35 mm may be provided within a circular area having a diameter of 10 mm. In fact the holes 602 may be provided in both sides of the polymer bag in that this would ease the manufacturing process significantly.

Still referring to Fig. 6a a mesh 604 is provided between two adhesive members 603, 605. The adhesive member 603 is adapted to secure the mesh 604 to the side 601 of the bag via its adhesive properties on both sides. This is indicated by the arrow 606. The adhesive member 603 has a lower passage 608 which covers the same area as the holes 602 in the side 601 of the polymer bag. The adhesive member 605 has an opening 607 which defines the permeability of the water outlet region. The larger the opening 607 the larger the overall permeability through the water outlet region. The adhesive member 605 may be implemented by providing a layer of ink directly to the mesh 604. This layer of ink should leave an opening 607 to ensure a predetermined permeability through the water outlet region.

The mesh 604 may be manufactured of a woven polyester-based material. However, the mesh 604 may be manufactured of non-woven materials as well. However, the mesh must be manufactured of a non-water absorbing material in order to secure a certain amount of permeability of the mesh 604. Typically, an acceptable permeability of the mesh 604 is provided by an openness of the mesh material between 2% and 10%.

Referring now to Fig. 6b the adhesive members 611, 613 have secured the mesh 612 to the side 609 of the polymer bag. The holes 610 in the polymer bag 609 prevent that air bubbles block the passage through the mesh 612. Thus, the holes 610 act as a filter for air bubbles.

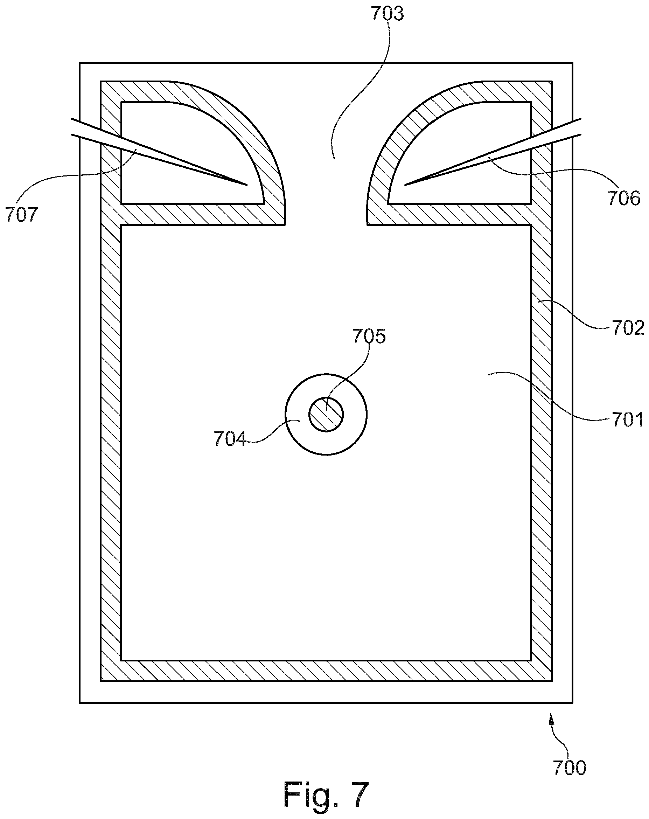

Fig. 7 shows the overall design of a preferred watering bag 700. As seen the watering bag 700 has a reservoir 701 and a water inlet region 703 being defined by welded structures 702. Two splits 706, 707 are provided in the watering bag 700 in order to provide binding or closing strips. The water outlet region of Fig. 6 is positioned near the center of the reservoir 701 with 704 being the adhesive and 705 being the mesh.

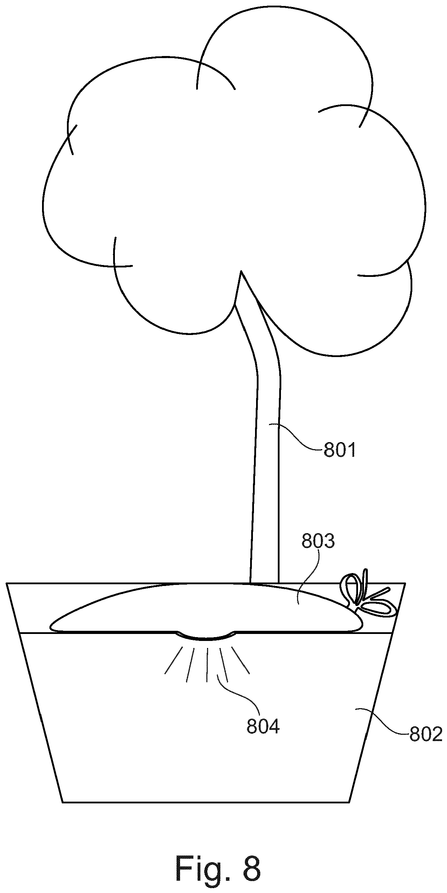

Fig. 8 illustrates how the watering bag 803 is adapted to be positioned directly on the soil 802 of an indoor plant 801, and how water leaks into the soil in the region 804.

The watering bag will automatically provide 2.3 liters of water to the indoor plant in a period of 7 - 10 day depending of room temperature, light conditions etc. In terms of manufacturing the watering bag is manufactured by heat welding of two pieces of foils together

## Claims

1. A watering bag (700) for automatic supply of water to plants, the watering bag comprising
1) a water inlet region (703),
2) a water reservoir (701), and
3) a water outlet region (704, 705),
wherein the water inlet region (703) comprises an opening for leading water to the water reservoir (701), and wherein the water outlet region (704, 705) comprises a friction inducing arrangement comprising a mesh (604) having a predetermined permeability for leading water from the water reservoir (701) to the exterior of the watering bag in a controlled manner,
wherein the mesh (604) is secured to the watering bag (601) using an adhesive (603), **characterized in that** said adhesive defining a lower passage (608) to the mesh (604), and wherein through-going holes (602) are provided in the watering bag (601) in relation to the lower passage (608), and wherein an upper passage (607) is arranged on the mesh (604).

2. A watering bag according to claim 1, wherein the watering bag (700) comprises a pair of polymer foils being welded together.

3. A watering bag according to claim 1 or 2, further comprising one or more releasable binding means being adapted to secure the watering bag (700) to a plant and/or to close the water inlet region.

4. A watering bag according to any of the preceding claims, wherein the water reservoir (701) is capable of housing between 1 and 4 litres of water, such as between 2 and 3 litres of water, such as around 2.3 litres of water.

5. A watering bag according to any of the preceding claims, wherein the friction inducing arrangement is dimensioned to provide one droplet of water at least every 60 seconds, such as one droplet at least every 45 seconds, such as one droplet at least every 30 seconds.

6. A watering bag according to any of the preceding claims, wherein the permeability of the mesh (604) is at least partly given by an openness of the mesh, said openness being in the range 2-10%, such as 2-8%, such as 2-6%, such as 2-4%, such as around 2%.

## Patentansprüche

1. Bewässerungsbeutel (700) zum automatischen Zuführen von Wasser an Pflanzen, der Bewässerungsbeutel umfassend:
1) einen Wassereinlassbereich (703),
2) einen Wasserspeicher (701) und
3) einen Wasserauslassbereich (704, 705),
wobei der Wassereinlassbereich (703) eine Öffnung zum Leiten von Wasser zum Wasserspeicher (701) umfasst, und wobei der Wasserauslassbereich (704, 705) eine reibungseinleitende Anordnung umfasst, die ein Gitter (604) mit einer vorgegebenen Durchlässigkeit umfasst, zum geregelten Leiten von Wasser aus dem Wasserspeicher (701) zur Außenseite des Bewässerungsbeutels,
wobei das Gitter (604) am Bewässerungsbeutel (601) unter Verwendung eines Haftstoffs (603) befestigt ist,
**dadurch gekennzeichnet, dass** der Haftstoff einen unteren Durchgang (608) zum Gitter (604) definiert, und wobei Durchgangslöcher (602) in Bezug zum unteren Durchgang (608) im Bewässerungsbeutel (601) vorgesehen sind, und wobei ein oberer Durchgang (607) am Gitter (604) angeordnet ist.

2. Bewässerungsbeutel nach Anspruch 1, wobei der Bewässerungsbeutel (700) ein Paar Polymerfolien umfasst, die zusammengeschweißt sind.

3. Bewässerungsbeutel nach einem der Ansprüche 1 oder 2, ferner umfassend ein oder mehr lösbare Bindeelemente, die zum Befestigen des Bewässerungsbeutels (700) an einer Pflanze und/oder zum Schließen des Wassereinlassbereichs geeignet sind.

4. Bewässerungsbeutel nach einem der vorhergehenden Ansprüche, wobei der Wasserspeicher (701) dazu imstande ist, zwischen 1 und 4 Liter Wasser einzufassen, wie etwa zwischen 2 und 3 Liter Wasser, wie etwa ungefähr 2,3 Liter Wasser.

5. Bewässerungsbeutel nach einem der vorhergehenden Ansprüche, wobei die reibungseinleitende Anordnung zum Zuführen von einem Wassertröpfchen zumindest alle 60 Sekundenbemessen ist, wie etwa ein Tröpfchen zumindest alle 45 Sekunden, wie etwa ein Tröpfchen zumindest alle 30 Sekunden.

6. Bewässerungsbeutel nach einem der vorhergehenden Ansprüche, wobei die Durchlässigkeit des Gitters (604) zumindest teilweise durch eine Offenheit des Gitters gegeben ist, wobei die Offenheit im Bereich von 2 - 10% liegt, wie etwa 2 - 8%, wie etwa 2 - 6%, wie etwa 2 - 4%, wie etwa ungefähr 2%.

## Revendications

1. Poche d'arrosage (700) destinée à fournir de l'eau à des plantes, la poche d'arrosage comprenant
1) une région d'entrée d'eau (703),
2) un réservoir d'eau (701), et
3) une région de sortie d'eau (704, 705),
dans laquelle la région d'entrée d'eau (703) comprend une ouverture permettant de guider de l'eau vers le réservoir d'eau (701), et dans laquelle la région de sortie d'eau (704, 705) comprend un dispositif de génération de friction comprenant un treillis (604) présentant une perméabilité prédéterminée pour guider de l'eau du réservoir d'eau (701) vers l'extérieur de la poche d'arrosage de façon contrôlée,
dans laquelle le treillis (604) est fixé à la poche d'arrosage (601) à l'aide d'un adhésif (603),
**caractérisée en ce que**
ledit adhésif définit un passage inférieur (608) vers le treillis (604), et des trous traversants (602) étant prévus dans la poche d'arrosage (601) par rapport au passage inférieur (608), et
un passage supérieur (607) étant agencé sur le treillis (604).

2. Poche d'arrosage selon la revendication 1, dans laquelle la poche d'arrosage (700) comprend une paire de feuilles polymères soudées l'une à l'autre.

3. Poche d'arrosage selon la revendication 1 ou 2, comprenant en outre un ou plusieurs moyens d'attache amovibles adaptés pour fixer la poche d'arrosage (700) à une plante et/ou pour fermer la région d'entrée d'eau.

4. Poche d'arrosage selon l'une quelconque des revendications précédentes, dans laquelle le réservoir d'eau (701) est capable d'accueillir entre 1 et 4 litres d'eau, par exemple entre 2 et 3 litres d'eau, par exemple environ 2,3 litres d'eau.

5. Poche d'arrosage selon l'une quelconque des revendications précédentes, dans laquelle le dispositif de génération de friction est dimensionné pour fournir une gouttelette d'eau au moins toutes les 60 secondes, par exemple une gouttelette au moins toutes les 45 secondes, par exemple une gouttelette au moins toutes les 30 secondes.

6. Poche d'arrosage selon l'une quelconque des revendications précédentes, dans laquelle la perméabilité du treillis (604) est au moins partiellement assurée par un degré d'ouverture du treillis, ledit degré d'ouverture étant compris entre 2 et 10%, par exemple entre 2 et 8%, par exemple entre 2 et 6%, par exemple entre 2 et 4%, par exemple d'environ 2%.
